(19) Europäisches Patentamt / European Patent Office / Office européen des brevets

(11) **EP 4 478 190 A1**

(12) **EUROPEAN PATENT APPLICATION**

(43) Date of publication:
**18.12.2024 Bulletin 2024/51**

(21) Application number: **24158778.1**

(22) Date of filing: **21.02.2024**

(51) International Patent Classification (IPC):
**G06F 9/48** *(2006.01)*     **G06F 9/50** *(2006.01)*
**G06N 3/02** *(2006.01)*     **G06N 3/08** *(2023.01)*

(52) Cooperative Patent Classification (CPC):
**G06F 9/4881; G06F 9/4887; G06F 9/5027;**
**G06F 9/5066;** G06N 3/02; G06N 3/08

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.06.2023 KR 20230074983**

(71) Applicants:
• **Samsung Electronics Co., Ltd.**
  **Suwon-si, Gyeonggi-do 16677 (KR)**

• **Research & Business Foundation**
  **Sungkyunkwan**
  **Suwon-si, Gyeonggi-do 16419 (KR)**

(72) Inventors:
• **LEE, Jinkyu**
  **Suwon-si 16419 (KR)**
• **LEE, Seunghoon**
  **Suwon-si 16419 (KR)**

(74) Representative: **Arnold & Siedsma**
  **Bezuidenhoutseweg 57**
  **2594 AC The Hague (NL)**

(54) **ELECTRONIC DEVICE AND METHOD WITH GRAPH GENERATION AND TASK SET SCHEDULING**

(57)     An electronic device includes: one or more first processors configured to: determine features of a plurality of nodes corresponding to a plurality of tasks comprised in a task set, based on a period and an execution time of each of the plurality of tasks; determine one or more edges between the plurality of nodes corresponding to a relationship between the plurality of tasks; and generate a graph corresponding to the task set based on the features of the plurality of nodes and the one or more edges between the plurality of nodes, wherein the plurality of tasks is executed according to a deadline which is set for each of the plurality of tasks in one or more second processors to which the plurality of tasks is assigned.

**FIG. 2**

**Description**

BACKGROUND

1. Field

The following description relates to an electronic device and method with graph generation and task set scheduling.

2. Description of Related Art

In a multi-processor embedded system, to ensure real-time property of tasks, the tasks may be appropriately assigned to processors and processed by the processors within a set time.

Assigning tasks in a task set to processors may be replaced with a bin packing problem. However, replacing the assigning with the bin packing problem may not result in an optimal answer unless the number of all cases of assigning tasks to processors is determined.

To solve an issue of the bin-packing ensuring real-time property, such methods as Fisher-Baruah-Baker(FBB)-first-fit-decreasing (FFD) (FBB-FFD), utilization best-fit, and utilization worst-fit may be used to assign tasks in a task set to processors.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, an electronic device includes: one or more first processors configured to: determine features of a plurality of nodes corresponding to a plurality of tasks comprised in a task set, based on a period and an execution time of each of the plurality of tasks; determine one or more edges between the plurality of nodes corresponding to a relationship between the plurality of tasks; and generate a graph corresponding to the task set based on the features of the plurality of nodes and the one or more edges between the plurality of nodes, wherein the plurality of tasks is executed according to a deadline which is set for each of the plurality of tasks in one or more second processors to which the plurality of tasks is assigned.

The features of the plurality of nodes may be determined based on the period, the execution time, a value obtained by dividing the execution time by the period, and a value obtained by subtracting the execution time from the period.

For the determining of the one or more edges, the one or more first processors may be configured to, in response to the plurality of tasks being assigned to the one or more second processors, determine the one or more edges based on interference by a priority between the plurality of tasks.

For the determining of the one or more edges, the one or more first processors may be configured to, in response to a higher priority task of the tasks and a lower priority task of the tasks being assigned to the one or more second processors, determine the interference based on an influence of the higher priority task on the lower priority task.

For the determining of the one or more edges the one or more first processors may be configured to determine the interference based on a period and an execution time of a higher priority task and a period and an execution time of a lower priority task.

For the determining of the one or more edges, the one or more first processors may be configured to determine the interference based on a constraint that allows processing of each of the plurality of tasks to be completed within the deadline.

The one or more edges may include an edge weight determined based on a period and an execution time of a higher priority task of the tasks and a period and an execution time of a lower priority task of the tasks.

The electronic device may include a memory storing instructions that, when executed by the one or more first processors, configured the one or more first processors to perform the determining of the features, the determining of the edge, and the generating of the graph.

In one or more general aspects, an electronic device includes: a plurality of first processors configured to: assign a plurality of tasks included in a task set to the plurality of first processors based on a set partitioned schedule; and process the plurality of tasks assigned to the plurality of first processors, wherein the partitioned schedule is determined using a trained neural network model and a graph generated corresponding to the task set, and wherein the plurality of tasks is executed according to a deadline which is set for each of the plurality of tasks in the plurality of first processors to which the plurality of tasks is assigned.

The neural network model may be trained to: based on a period and an execution time of each of a plurality of learning tasks included in a learning task set, determine features of a plurality of nodes corresponding to the plurality of learning tasks; determine one or more edges between the plurality of nodes corresponding to a relationship between the plurality of learning tasks; generate a learning graph corresponding to the learning task set based on the features of the plurality of nodes and the one or more edges between the plurality of nodes; and assign the plurality of learning tasks to a plurality of second processors using the learning graph.

The neural network model may be trained as the number of the plurality of learning tasks and the number of the plurality of second processors are arbitrarily set for each learning.

In response to the plurality of learning tasks being assigned to the plurality of second processors, the one or more edges may be determined based on interference between the plurality of learning tasks.

The interference may be determined based on a period and an execution time of a higher priority learning task and a period and an execution time of a lower priority learning task.

The neural network model may be trained based on a constraint that allows processing of each of the plurality of learning tasks to be completed within the period.

In one or more general aspects, a processor-implemented method includes: determining features of a plurality of nodes corresponding to a plurality of tasks included in a task set based on a period and an execution time of each of the plurality of tasks; determining one or more edges between the plurality of nodes corresponding to a relationship between the plurality of tasks; and generating a graph corresponding to the task set based on the features of the plurality of nodes and the one or more edges between the plurality of nodes, wherein the plurality of tasks is executed according to a deadline which is set for each of the plurality of tasks in one or more processors to which the plurality of tasks is assigned.

The features of the plurality of nodes may be determined based on the period, the execution time, a value obtained by dividing the execution time by the period, and a value obtained by subtracting the execution time from the period.

The determining the one or more edges may include, in response to the plurality of tasks being assigned to the one or more processors, determining the edge based on interference by a priority between the plurality of tasks.

The determining the one or more edges may include, in response to a higher priority task and a lower priority task being assigned to one or more second processors, determining the interference based on an influence of the higher priority task on the lower priority task.

The determining the one or more edges may include determining the interference based on a period and an execution time of a higher priority task and a period and an execution time of a lower priority task.

The determining the one or more edges may include determining the interference based on a constraint that allows processing of each of the plurality of tasks to be completed within the deadline.

Other features and aspects will be apparent from the following detailed description, the drawings, and the claims.

BRIEF DESCRIPTION OF THE DRAWINGS

FIG. 1 illustrates an example electronic device, in accordance with one or more example embodiments.
FIG. 2 illustrates an example operation of an electronic device to generate a graph, in accordance with one or more example embodiments.
FIG. 3 illustrates an example graph generated by an electronic device, in accordance with one or more example embodiments.
FIG. 4 illustrates an example electronic device, in accordance with one or more example embodiments.
FIG. 5 illustrates an example operation of an electronic device to assign a plurality of tasks to a plurality of first processors according to a partitioned schedule, in accordance with one or more example embodiments.
FIG. 6 illustrates an example partitioned schedule, in accordance with one or more example embodiments.
FIG. 7 illustrates an example electronic device, in accordance with one or more example embodiments.
FIG. 8 illustrates an example operation of an electronic device to train a neural network model, in accordance with one or more example embodiments.
FIG. 9 illustrates an example neural network model trained using a reinforcement learning method, in accordance with one or more example embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as "connected to," "coupled to," or "joined to" another component or element, it may be directly (e.g., in contact with the other component or element) "connected to," "coupled to," or "joined to" the other component or element, or there may reasonably be one or more other components or elements intervening therebetween. When a component or element is described as "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The phrases "at least one of A, B, and C," "at least one of A, B, or C," and the like are intended to have disjunctive meanings, and these phrases "at least one of A, B, and C," "at least one of A, B, or C," and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

Hereinafter, examples will be described in detail with reference to the accompanying drawings. When describing the examples with reference to the accompanying drawings, like reference numerals refer to like components and a repeated description related thereto is omitted.

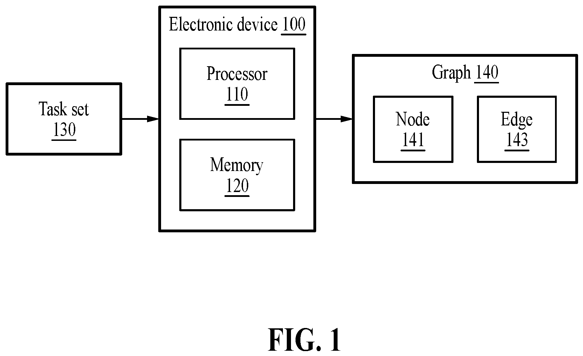

FIG. 1 illustrates an example electronic device, in accordance with one or more example embodiments.

Referring to FIG. 1, an electronic device 100 according to various example embodiments may include a processor 110 (e.g., one or more processors) and a memory 120 (e.g., one or more memories).

The processor 110 may execute, for example, instructions (e.g., a program or software) to control at least one other component (e.g., a hardware component) of the electronic device 100 connected to the processor 110 and may perform various data processing or computation. According to an example embodiment, as at least a part of data processing or computation, the processor 110 may store commands or data received from another component (e.g., a sensor module or a communication module) in a volatile memory, process the commands or data stored in the volatile memory, and store resulting data in a non-volatile memory. According to an example embodiment, the processor 110 may include a main processor (e.g., a central processing unit (CPU) or an application processor (AP)) and/or an auxiliary processor (e.g., a graphics processing unit (GPU), a neural processing unit (NPU), an image signal processor (ISP), a sensor hub processor, and/or a communication processor (CP)) that is operable independently from, or in conjunction with, the main processor. For example, when the electronic device 100 includes the main processor and the auxiliary processor, the auxiliary processor may be adapted to consume less power than the main processor and/or to be specific to a specified function. The auxiliary processor may be implemented separately from the main processor or as a part of the main processor.

The auxiliary processor may control at least some of functions or states related to at least one (e.g., a display module, a sensor module, and/or a communication module) of the components of the electronic device 100, instead of the main processor while the main processor is in an inactive (e.g., sleep) state or along with the main processor while the main processor is an active state (e.g., executing an application). According to an example embodiment, the auxiliary processor (e.g., an ISP and/or a CP) may be implemented as a part of another component (e.g., a camera module and/or a communication module) that is functionally related to the auxiliary processor (e.g., an ISP and/or a CP). According to an example embodiment, the auxiliary processor (e.g., an NPU) may include a hardware structure specified for processing an artificial intelligence (AI) model. The AI model may be generated by machine learning. Such learning may be performed by, for example, the electronic device 100 itself in which the AI model is executed, or performed via a separate server (e.g., a server). Learning algorithms may include, as non-limiting examples, supervised learning, unsupervised learning, semi-supervised learning, and/or reinforcement learning. The AI model may include a plurality of layers of an artificial neural network. The artificial neural network may include, as non-limiting examples, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, a graph neural network (GNN), a graph attention network (GAT), and/or a combination of two or more thereof. The AI model may additionally or alternatively include a software structure in addition to the hardware structure.

The memory 120 may store a variety of data used by at least one component (e.g., the processor 110) of the electronic device 100. The data may include, for example, software (e.g., a program) and input data or output data for a command related thereto. The memory 120 may include, for example, a volatile memory or a non-volatile memory. The memory 120 may be or include a non-transitory computer-readable storage medium storing instructions that, when executed by the processor 110, configure the processor 110 to perform any one, any combination, or all of operations and methods of the processor 110.

A task set may include a plurality of tasks. Each of the tasks may be represented as a (T, C, D) model or a (T, C) model, in which T denotes a period in which a task is executed again, C denotes an execution time of the task, and D denotes a deadline by which the task is to be completed based on a point in time at which the task is input. When a task (or task set) is input, the task may be assigned to a processor for processing the task and processed by the deadline.

The plurality of tasks may be executed in the processor to which the plurality of tasks is assigned, according to the deadline which is set for each of the plurality of tasks based on a priority. For example, a plurality of tasks may be assigned to a processor (or a plurality of processors) for processing the plurality of tasks in real time. The plurality of tasks may be executed within a deadline which is set for each of the plurality of tasks in the processor (or the plurality of processors) to which the plurality of tasks is assigned. In an example, a higher priority task may be processed before a lower priority task. A plurality of tasks (or a task set) may have a real-time property in which processing of the plurality of tasks is completed within set deadlines and the plurality of tasks is processed according to a priority.

When the plurality of tasks has the real-time property, the electronic device 100 may ensure that the processing of each of the tasks is completed within a deadline (or period). In addition, a priority may be set for each of the plurality of tasks, and a higher priority task may be processed before a lower priority task. The electronic device 100 also may assign the plurality of tasks having the real-time property to a processor (or a plurality of processors) for processing the plurality of tasks according to a partitioned schedule that satisfies the real-time property.

For example, when a plurality of tasks is represented by a (T, C) model, a deadline of a task may be a period of the task.

The electronic device 100 may generate a graph corresponding to a task set. The graph may include a plurality of nodes and an edge corresponding to a relationship between the plurality of nodes.

The electronic device 100 may determine each of tasks included in the task set as a node and may determine a feature of each of the tasks as a feature of a corresponding node. The electronic device 100 may determine a relationship between the tasks as the edge.

The electronic device 100 may determine features of the plurality of nodes based on periods and execution times of the plurality of tasks.

For example, a feature of each of the plurality of nodes may be determined based on a period, an execution time, a value obtained by dividing the execution time by the period, and/or a value obtained by subtracting the execution time from the period. For example, the electronic device 100 may determine a feature of a node corresponding to a task as expressed by Equation 1 below, for example, using a period $T_i$ and an execution time $C_i$ of an i-th task included in a task set.

Equation 1:

$$[\, T_i, \ C_i, \ C_i/T_i, \ T_i - C_i \,]$$

The electronic device 100 may determine the edge between the plurality of nodes corresponding to a relationship between the plurality of tasks. The edge may include an edge weight determined according to the relationship between the plurality of tasks.

The plurality of tasks may each include a priority. The priority may refer to an order in which a plurality of tasks is processed when the plurality of tasks is assigned to a processor (or a plurality of processors) for processing the plurality of tasks. For example, when a plurality of tasks is assigned to a processor (or a plurality of processors) for processing the plurality of tasks, processing a higher priority task may be completed before a lower priority task.

When a plurality of tasks is assigned to a processor (or a plurality of processors) for processing the plurality of tasks, the electronic device 100 may determine an edge based on interference by a priority between the plurality of tasks.

The interference by a priority between a plurality of tasks may refer to an influence of the plurality of tasks on each other according to the priority. For example, when a higher priority task and a lower priority task are assigned to the same processor that processes a plurality of tasks, the lower priority task may be affected by the higher priority task. In an example, the lower priority task may be processed after the higher priority task is processed, and thus the higher priority task may affect the lower priority task.

The electronic device 100 may calculate (e.g., determine) interference based on an influence of the higher priority task on the lower priority task.

The electronic device 100 may calculate the interference based on a period and an execution time of the higher priority task and a period and an execution time of the lower priority task. For example, the electronic device 100 may calculate the influence of the higher priority task on the lower priority task, as expressed by Equation 2 below, for example.

Equation 2:

$$\frac{T_k}{T_k - C_k} \cdot \frac{C_i}{T_i} + \frac{1}{T_k - C_k} \cdot C_i$$

In Equation 2 above, $T_k$ and $C_k$ denote a period and an execution time of a low priority task, respectively, and $T_i$ and $C_i$ denote a period and an execution time of a high priority task, respectively.

The electronic device 100 may determine an edge between the high priority task and the low priority task, using the interference calculated according to Equation 2 above. For example, according to Equation 2 above, the electronic device 100 may determine the edge between the high priority task and the low priority task, with an edge weight being

$$\frac{T_k}{T_k - C_k} \cdot \frac{C_i}{T_i} + \frac{1}{T_k - C_k} \cdot C_i$$

.

The electronic device 100 may calculate the interference based on a constraint that allows the processing of each of a plurality of tasks to be completed within a deadline.

When all tasks $\tau_k$ included in a task set $\tau$ have $R_k(\leq T_k)$ that satisfies Equation 3 below, for example, the task set $\tau$ may be scheduled through fixed-priority scheduling (FPS). Equation 3 below may represent the constraint that allows a plurality of tasks to be processed within a deadline.

Equation 3:

$$C_k + \sum_{\tau_i \in \mathrm{HI}_k} \left\lceil \frac{R_k}{T_i} \right\rceil \cdot C_i \leq R_k$$

In Equation 3 above, $R_k$ denotes a deadline by which processing a task $\tau_k$ is to be completed, and $C_k$ denotes an execution time of the task $\tau_k$. In addition, $\tau_i \in \mathrm{HI}_k$ denotes a task having a higher priority than the task $\tau_k$, and $T_i$ denotes a

period of the task $\tau_i$ having the higher priority than the task $\tau_k$.

Equation 3 above may be calculated as expressed by Equation 4 below, for example. Equation 4 below may be calculated by applying the period $T_k$ of the task $\tau_k$ as an upper bound of $R_k$ in Equation 3 above.

Equation 4:

$$C_k + \sum_{\tau_i \in \mathsf{HI}_k} \left\lceil \frac{T_k}{T_i} \right\rceil \cdot C_i \leq T_k$$

$$\Longleftrightarrow \qquad \sum_{\tau_i \in \mathsf{HI}_k} \left\lceil \frac{T_k}{T_i} \right\rceil \cdot C_i \leq T_k - C_k$$

$$\Longleftrightarrow \qquad \frac{\sum_{\tau_i \in \mathsf{HI}_k} \left\lceil \frac{T_k}{T_i} \right\rceil \cdot C_i}{T_k - C_k} \leq 1$$

In Equation 4, $\dfrac{\sum_{\tau_i \in \mathsf{HI}_k} \left\lceil \frac{T_k}{T_i} \right\rceil \cdot C_i}{T_k - C_k}$ may be calculated as expressed by Equation 5 below, for example.

Equation 5:

$$\frac{\sum_{\tau_i \in \mathsf{HI}_k} \left\lceil \frac{T_k}{T_i} \right\rceil \cdot C_i}{T_k - C_k} \leq \frac{\sum_{\tau_i \in \mathsf{HI}_k} \left( \frac{T_k}{T_i} + 1 \right) \cdot C_i}{T_k - C_k}$$

$$= \frac{\sum_{\tau_i \in \mathsf{HI}_k} \frac{C_i}{T_i} \cdot T_k + \sum_{\tau_i \in \mathsf{HI}_k} C_i}{T_k - C_k}$$

$$= \frac{T_k \cdot \sum_{\tau_i \in \mathsf{HI}_k} \frac{C_i}{T_i} + \sum_{\tau_i \in \mathsf{HI}_k} C_i}{T_k - C_k}$$

$$= \frac{T_k}{T_k - C_k} \cdot \sum_{\tau_i \in \mathsf{HI}_k} \frac{C_i}{T_i} + \frac{1}{T_k - C_k} \cdot \sum_{\tau_i \in \mathsf{HI}_k} C_i$$

Equation 5 above may represent an influence of all tasks having a higher priority than the task $\tau_k$ on the task $\tau_k$. In other words, the interference of all tasks having a higher priority than the task $\tau_k$ among a plurality of tasks on the task $\tau_k$

according to constraints can be calculated by $\dfrac{T_k}{T_k - C_k} \cdot \sum_{\tau_i \in \mathsf{HI}_k} \dfrac{C_i}{T_i} + \dfrac{1}{T_k - C_k} \cdot \sum_{\tau_i \in \mathsf{HI}_k} C_i$ . In

$\dfrac{T_k}{T_k - C_k} \cdot \sum_{\tau_i \in \mathsf{HI}_k} \dfrac{C_i}{T_i} + \dfrac{1}{T_k - C_k} \cdot \sum_{\tau_i \in \mathsf{HI}_k} C_i$ calculated according to Equation 5 above, the influence of the higher priority task $\tau_i$ on the lower priority task $\tau_k$ may be calculated as expressed by Equation 2 above and expressed as an edge.

Referring to Equations 2 to 5 above, the electronic device 100 may calculate interference according to a priority, based on an influence of a higher priority task on a lower priority task.

Referring to Equations 2 to 5 above, the electronic device 100 may calculate the interference according to the priority, based on a period and an execution time of the higher priority task and a period and an execution time of the lower priority task.

Referring to Equations 2 to 5 above, the electronic device 100 may calculate the interference according to the priority, based on a constraint that allows processing of each of a plurality of tasks to be completed within a deadline.

The electronic device 100 may determine an edge between the plurality of tasks, using the calculated interference.

The electronic device 100 may generate a graph corresponding to a task set based on features of a plurality of nodes and an edge between the plurality of nodes. In the generated graph, the plurality of nodes may respectively correspond to a plurality of tasks. In the generated graph, the features of the plurality of nodes may represent features of the plurality of tasks respectively corresponding to the plurality of nodes. In the generated graph, the edge connected between the plurality of nodes may represent a relationship between the plurality of tasks.

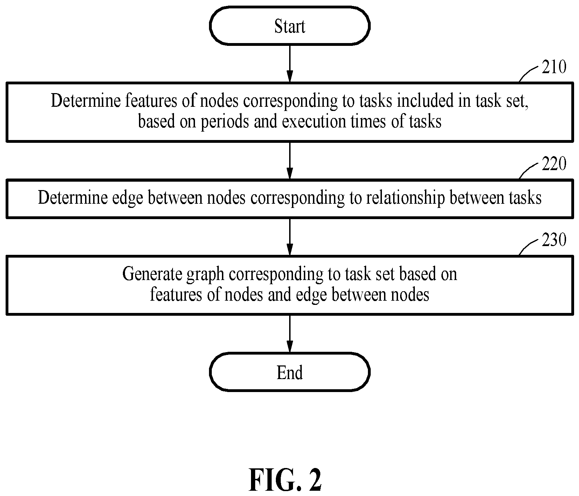

FIG. 2 illustrates an example operation of an electronic device to generate a graph, in accordance with one or more example embodiments. Operations 210 to 230 of FIG. 2 may be performed in the shown order and manner. However, the order of one or more of the operations may change and/or one or more of the operations may be performed in parallel or simultaneously.

In operation 210, the electronic device 100 may determine features of a plurality of nodes corresponding to a plurality of tasks included in a task set, based on periods and execution times of the plurality of tasks. The features of the plurality of nodes may represent features of the plurality of tasks respectively corresponding to the plurality of nodes.

For example, the electronic device 100 may determine a feature of each of the plurality of nodes based on a period and an execution time of each task, a value obtained by dividing the execution time by the period, and a value obtained by subtracting the execution time from the period. This example may be applied as an example of determining the feature of each of the plurality of nodes by the electronic device 100 to generate a graph corresponding to the task set, in a case in which the plurality of tasks is represented by a (T, C) model. However, examples are not limited to the foregoing example. For example, in a case in which the plurality of tasks is represented by a (T, C, D) model, the electronic device 100 may determine the features of the plurality of nodes based on a period, an execution time, and a deadline of each task.

In operation 220, the electronic device 100 may determine an edge between the plurality of nodes corresponding to a relationship between the plurality of tasks. The edge may represent a relationship connected between the plurality of nodes in a graph. For example, the edge may include an edge weight.

When a plurality of tasks is assigned to a processor (or a plurality of second processors) for processing the plurality of tasks, the electronic device 100 may determine an edge based on interference by a priority between the plurality of tasks. For example, the electronic device 100 may determine the edge based on the interference by the priority. The determined edge may represent a connection relationship between a node corresponding to a high priority task and a node corresponding to a low priority task, and may include an edge weight according to the calculated interference.

In operation 220, when a higher priority task and a lower priority task are assigned to a processor (or a plurality of processors) for processing the plurality of tasks, the electronic device 100 may calculate the interference based on an influence of the higher priority task on the lower priority task.

In operation 220, the electronic device 100 may calculate the interference based on a period and an execution time of the higher priority task and a period and an execution time of the lower priority task.

In operation 220, the electronic device 100 may calculate the interference based on a constraint that allows the processing of each of the plurality of tasks to be completed within a deadline.

In operation 230, the electronic device 100 may generate a graph corresponding to the task set based on the features of the plurality of nodes and the edge between the plurality of nodes. The graph corresponding to the task set may be determined based on the plurality of nodes corresponding to the plurality of tasks, the features of the plurality of nodes representing features of the plurality of tasks respectively corresponding to the plurality of nodes, and the edge corresponding to a relationship between the plurality of tasks.

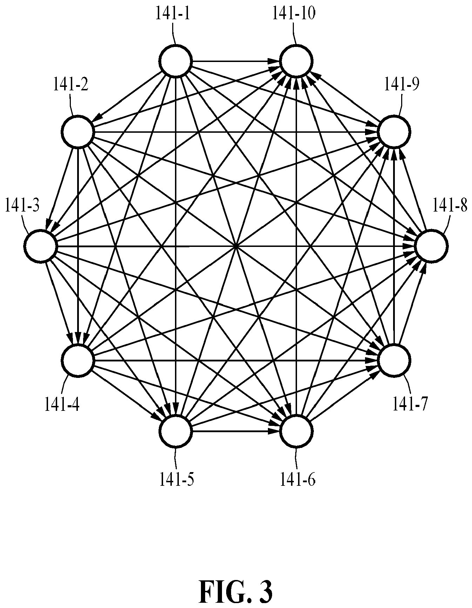

FIG. 3 illustrates an example graph generated by an electronic device, in accordance with one or more example embodiments.

The example graph shown in FIG. 3 may be a graph generated by the electronic device 100 in response to a task set including ten tasks, and the number and priorities of tasks may not be limited to those shown in FIG. 3.

As shown in FIG. 3, a plurality of nodes 141-1, 141-2, 141-3, 141-4, 141-5, 141-6, 141-7, 141-8, 141-9, and 141-10 may respectively correspond to a plurality of tasks 1, 2, 3, 4, 5, 6, 7, 8, 9, and 10 included in a task set. Referring to FIG. 3, respective priorities of the plurality of tasks may decrease in an order starting from a priority of task 1, a priority of task 2, ...., a priority of task 9, and a priority of task 10, for example, (priority of task 1)>(priority of task 2)> ...,>(priority of task 9) > (priority of task 10).

Arrows between the nodes shown in FIG. 3 may indicate edges. An edge may represent a relationship between tasks respectively corresponding to nodes. The edge may be determined based on interference by a priority. The edge may be determined based on interference calculated based on an influence of a higher priority task on a lower priority task.

As shown in FIG. 3, arrows may indicate edges between the nodes 141-1 through 141-10, and directions of the arrows may indicate priorities of the tasks corresponding to the nodes 141-1, ..., and 141-10. For example, a direction of an arrow between the nodes 141-1 and 141-2 may be a direction from the node 141-1 corresponding to a task having a higher priority to the node 141-2 corresponding to a task having a lower priority.

Referring to FIG. 3, a priority of task 1 corresponding to the node 141-1 may be the highest among the priorities of the plurality of tasks. For example, when task 1 and task 2 are assigned to a processor (or a plurality of processors) for processing the plurality of tasks, the electronic device 100 may determine an edge based on interference by respective priorities of task 1 and task 2.

When task 1 and task 2 are assigned to the processor (or the plurality of processors) for processing the plurality of tasks, the electronic device 100 may calculate the interference based on an influence of task 1 on task 2.

The electronic device 100 may calculate the interference based on a period and an execution time of task 1 and a period and an execution time of task 2.

Depending on the influence of task 1 having a higher priority on task 2 having a lower priority (for example, a delay in a time for task 2 to be processed), the electronic device 100 may determine the edge between the node 141-1 corresponding to task 1 and the node 141-2 corresponding to task 2. An edge weight between the node 141-1 and the node 141-2 may be determined based on the interference that is calculated based on the influence of task 1 on task 2.

Similar to the foregoing operation of determining the edge and the edge weight between the node 141-1 and the node 141-2, the electronic device 100 may determine an edge and an edge weight between the node 141-1 and each of the other nodes 141-3 and 141-4, ..., and 141-10.

Similar to the foregoing operation of determining the edge and the edge weight between the node 141-1 and each of the nodes 141-2, 141-3, ..., and 141-10, the electronic device 100 may determine edges and edge weights between the nodes 141-1, ..., and 141-10.

The graph shown in FIG. 3 may be generated in response to the task set. The graph may include the plurality of nodes 141-1, ..., and 141-10 and the edges between the plurality of nodes 141-1, ..., and 141-10. The edges between the plurality of nodes 141-1, ..., and 141-10 may include the edge weights calculated based on priorities, periods, and execution times of the plurality of nodes 141-1, ..., and 141-10.

The plurality of nodes 141-1, ..., and 141-10 may respectively correspond to the plurality of tasks included in the task set. The graph may include the plurality of nodes 141-1, ..., and 141-10 and the edges connected between each of the nodes 141-1, ..., and 141-10 and each different one of the nodes 141-1, ..., and 141-10. The edge weights may be determined according to the priorities of the tasks respectively corresponding to the plurality of nodes 141-1, ..., and 141-10.

The graph of FIG. 3 may visually show the plurality of nodes 141-1, ..., and 141-10 and the edges and the edge weights between the plurality of nodes 141-1, ..., and 141-10. For example, the electronic device 100 may determine the plurality of nodes 141-1, ..., and 141-10 and the edges and the edge weights between the plurality of nodes 141-1, ..., and 141-10. In an example, data including the plurality of nodes 141-1, ..., and 141-10 and the edges and the edge weights between the plurality of nodes 141-1, ..., and 141-10 calculated by the electronic device 100 may be substantially the same as the graph shown in FIG. 3.

As described above with reference to FIGS. 1 to 3, the electronic device 100 of one or more embodiments may generate a graph based not only on features of a plurality of tasks but also on a relationship between the plurality of tasks (e.g., an influence between the plurality of tasks, interference by a priority of each of the plurality of tasks, etc.).

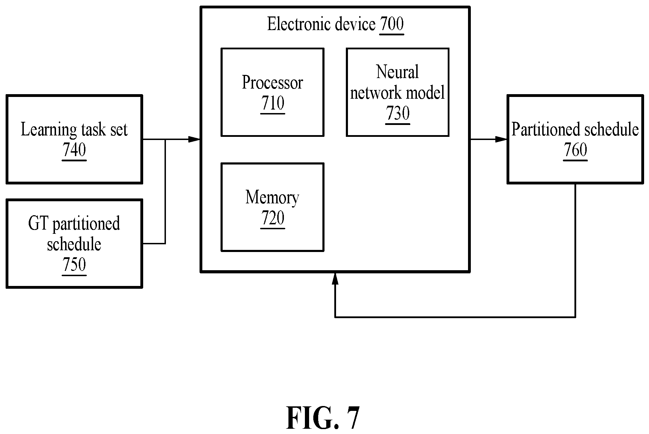

The graph generated by the electronic device 100 may be used to train a neural network model (e.g., a GNN, a GAT, a reinforcement learning model, etc.) to output a partitioned schedule. When the electronic device 100 determines the edge weights of the graph based on the interference by the priorities among the plurality of tasks, the neural network model may be trained to output the partitioned schedule based on an influence according to the priorities of the plurality of tasks. Training the neural network model will be described in detail below with reference to FIGS. 7 to 9.

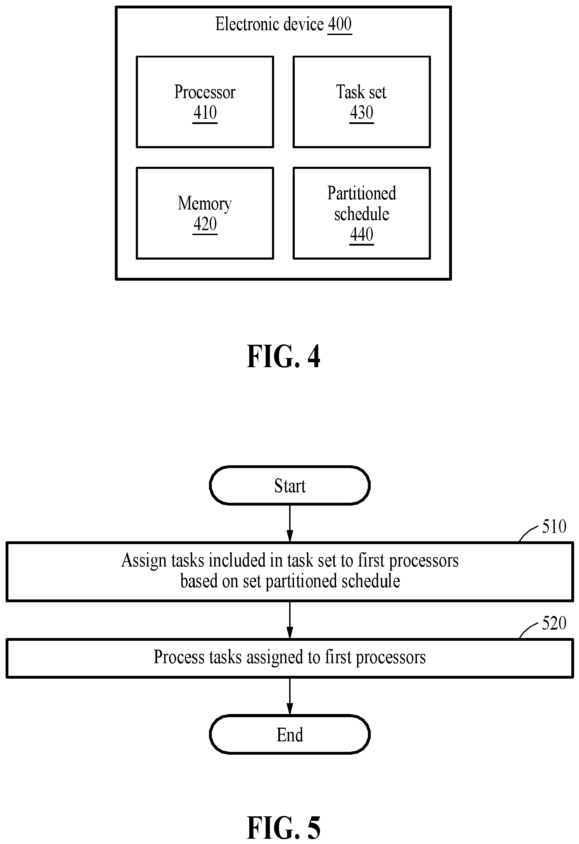

FIG. 4 illustrates an example electronic device, in accordance with one or more example embodiments.

Referring to FIG. 4, an electronic device 400 may include a processor 410 (e.g., one or more processors), a memory 420 (e.g., one or more memories), a task set 430, and a partitioned schedule 440. The processor 410 may be provided as a plurality of processors. For the processor 410 of FIG. 4, reference may be made to substantially the same description of the processor 110 provided with reference to FIG. 1, or the description may be different. Also, for the memory 420 of FIG. 4, reference may be made to substantially the same description of the memory 120 provided above with reference to FIG. 1, or the description may be different.

The electronic device 400 of FIG. 4 may assign a plurality of tasks of the task set 430 to the plurality of processors 410 according to the partitioned schedule 440. The electronic device 400 may process the plurality of tasks assigned to the plurality of processors 410.

For example, the plurality of tasks may each include a period and an execution time set for each of the plurality of tasks. The plurality of tasks may be executed according to a deadline which is set for each of the plurality of tasks in the plurality of processors 410 to which the plurality of tasks is assigned. For each of the plurality of tasks, a priority may be set. A higher priority task may be processed before a lower priority task.

The plurality of tasks may be assigned to the plurality of processors 410 and may be processed within the deadline which is set for each of the plurality of tasks according to the priority. In addition, according to the priority of the plurality of tasks, the plurality of tasks may be processed such that a higher priority task is processed before a lower priority task. Such a characteristic that processing of each of the plurality of tasks are to be completed within the deadline which is set for each of the plurality of tasks according to the priority may be referred to as a real-time property.

The plurality of tasks assigned to the plurality of processors 410 according to the partitioned schedule 440 may be processed within the deadline which is set for each of the plurality of tasks. The plurality of tasks may be assigned to the plurality of processors 410 according to the partitioned schedule 440 to satisfy the real-time property. The electronic device 400 may assign the plurality of tasks to the plurality of processors 410 according to the partitioned schedule 440 to satisfy the real-time property of the plurality of tasks.

The partitioned schedule 440 may be output by a neural network model trained using a graph. The partitioned schedule 440 may refer to a schedule for assigning the plurality of tasks included in the task set 430 to the plurality of processors 410 by inputting the graph generated in response to the task set 430 to the trained neural network model.

The partitioned schedule 440 may refer to a schedule for assigning the plurality of tasks to the plurality of processors 410 such that the processing of the plurality of processors 410 is completed within the set deadline.

For example, when the plurality of tasks is represented by a (T, C) model, the deadline of each of the plurality of tasks may be determined as a period T of each of the plurality of tasks.

The neural network model may be trained to assign the plurality of tasks included in the task set 430 to the plurality of processors 410 using the graph generated by the electronic device 100 described above with reference to FIGS. 1 and 2.

When the electronic device 400 is an autonomous vehicle, the plurality of tasks may have a real-time property. The electronic device 400 may assign the plurality of tasks (e.g., a task related to machine learning for object recognition, a task related to vehicle driving, a task related to multimedia control, etc.) to the plurality of processors 410 according to the set partitioned schedule 440 to process the plurality of tasks. When a typical electronic device does not complete the tasks (e.g., the object recognition-related task, the vehicle control-related task, etc.) within a set deadline, an accident may occur, and thus the electronic device 400 of one or more embodiments may complete the plurality of tasks within the set deadline and may process the tasks according to a priority of each of the plurality of tasks.

In addition to such a case in which the electronic device 400 is an autonomous vehicle, in other various cases in which the electronic device 400 is a drone, an intermittent system, and/or a mobile device for virtual reality (VR)/augmented reality (AR), a plurality of tasks for an operation of the electronic device 400 may have the real-time property.

FIG. 5 illustrates an example operation of an electronic device to assign a plurality of tasks to a plurality of first processors according to a partitioned schedule, in accordance with one or more example embodiments. Operations 510 to 520 of FIG. 5 may be performed in the shown order and manner. However, the order of one or more of the operations may change and/or one or more of the operations may be performed in parallel or simultaneously.

Referring to FIG. 5, in operation 510, the electronic device may assign a plurality of tasks included in a task set (e.g., the task set 430) to a plurality of first processors 410 based on a set partitioned schedule (e.g., the partitioned schedule 440).

The partitioned schedule 440 may be output by a trained neural network model such that the plurality of tasks is assigned to the plurality of first processors 410. The neural network model may output the partitioned schedule 440 using a graph corresponding to the input task set.

The neural network model may be trained to assign a plurality of learning tasks included in a learning task set to a plurality of second processors, using the learning task set and a ground truth (GT) partitioned schedule.

In operation 520, the electronic device may process the plurality of tasks assigned to the plurality of first processors 410. The plurality of tasks may be processed according to a deadline which is set for each of the plurality of tasks in the plurality of first processors 410 to which the plurality of tasks is assigned. The processing of the plurality of tasks may be completed in the plurality of first processors 410 within the deadline which is set for each of the plurality of tasks.

The plurality of tasks may be processed according to a priority set for each of the plurality of tasks. For example, a higher priority task may be processed before a lower priority task.

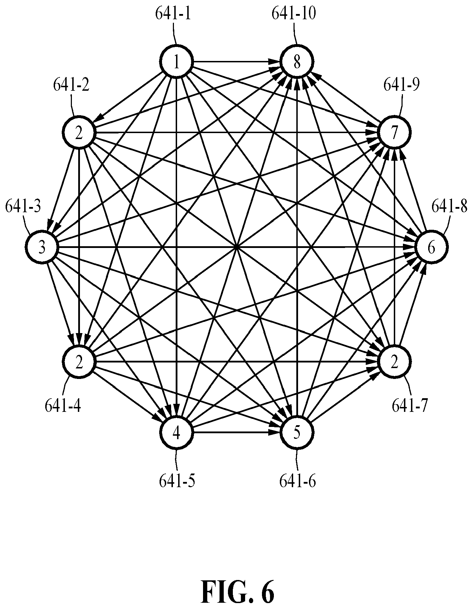

FIG. 6 illustrates an example partitioned schedule, in accordance with one or more example embodiments.

A partitioned schedule (e.g., the partitioned schedule 440) of FIG. 6 may be for the electronic device 400 to assign ten tasks included in a task set 430 to eight processors 410. For example, the partitioned schedule 440 may be output by a trained neural network model to assign the ten tasks to the eight processors 410.

For priorities of a plurality of nodes 641-1, 641-2, 641-3, 641-4, 641-5, 641-6, 641-7, 641-8, 641-9, and 641-10, and edges and edge weights between the plurality of nodes 641-1, ..., and 641-10 of FIG. 6, reference may be made to substantially the same description of the priorities of the plurality of nodes 141-1, ..., and 141-10 and the edges and the edge weights between the plurality of nodes 141-1, ..., and 141-10 provided above with reference to FIG. 3.

The numbers (e.g., numbers "1" through "8") indicated at the plurality of nodes 641-1, ..., and 641-10 shown in FIG. 6 may represent indices of the processors 410 to which the plurality of tasks respectively corresponding to the plurality of nodes 641-1, ..., and 641-10 are assigned. For example, number "1" indicated at the node 641-1 may indicate that task 1 corresponding to the node 641-1 is assigned to processor 1 among the eight processors, and number "2" indicated at the node 641-4 may indicate that task 4 corresponding to the node 641-4 is assigned to processor 2 among the eight processors. Substantially the same as the node 641-1, numbers respectively indicated at the nodes 641-2, ..., and 641-10 indicate indices of processors 410 to which task 2 to task 10 respectively corresponding to the nodes 641-2, ..., and 641-10 are assigned.

The electronic device 400 may assign the plurality of tasks to the plurality of processors 410 according to the partitioned schedule 440 as shown in FIG. 6. For example, the electronic device 400 may assign the plurality of tasks corresponding to the plurality of nodes 641-2, ..., and 641-10 according to the indices of the processors 410.

The trained neural network model may receive, as an input, a graph corresponding to the task set 430 and output the partitioned schedule 440 for assigning the plurality of tasks included in the task set 430 to the plurality of processors 410. For example, the graph shown in FIG. 6 may represent the input of the neural network model, and the indices of the processors 410 assigned to the plurality of nodes 641-2, ..., and 641-10 may represent the output of the neural network model.

FIG. 7 illustrates an example electronic device, in accordance with one or more example embodiments.

An electronic device 700 shown in FIG. 7 may be a training device for training a neural network model 730 that outputs a partitioned schedule 760.

As shown in FIG. 7, the electronic device 700 may include a processor 710 (e.g., one or more processors), a memory 720 (e.g., one or more memories), and the neural network model 730. For the processor 710 of FIG. 7, reference may be made to substantially the same description of the processor 110 provided above with reference to FIG. 1. Also, for the memory 720 of FIG. 7, reference may be made to substantially the same description of the memory 120 provided above with reference to FIG. 1.

A learning task set 740 may include a plurality of learning tasks. For each of the plurality of learning tasks, a priority, a period, and an execution time may be set. The number of learning tasks included in the learning task set 740 may be arbitrarily set, and the priority, the period, and the execution time of each learning task may be arbitrarily set. The learning task set 740 may be generated as the number of learning tasks, the priority of each of the learning tasks, and the execution time of each of the learning tasks are arbitrarily set.

A GT partitioned schedule 750 may be a schedule for assigning the plurality of learning tasks of the learning task set 740 to a processor (or a plurality of processors) for processing the learning tasks. For example, the GT partitioned schedule 750 may be a schedule for assigning the plurality of learning tasks to the plurality of processors through such methods or algorithms as first fit, best fit, or worst fit to satisfy a real-time property of the plurality of learning tasks. That the GT partitioned schedule 750 satisfies the real-time property may indicate that, when a plurality of learning tasks is assigned to a processor (or a plurality of processors) according to the GT partitioned schedule 750, processing of the plurality of learning tasks is completed within a set deadline according to priorities of the plurality of learning tasks.

The electronic device 700 may generate a learning graph corresponding to the learning task set 740 using the learning task set 740.

The electronic device 700 may determine features of a plurality of nodes corresponding to the plurality of learning tasks based on periods and execution times of the plurality of learning tasks. The electronic device 700 may determine an edge between the plurality of nodes corresponding to a relationship between the plurality of learning tasks. The electronic device 700 may generate the learning graph corresponding to the learning tasks based on the features of the plurality of nodes and the edge between the plurality of nodes.

For an operation of generating the learning graph corresponding to the learning task set 740 by the electronic device 700 using the learning task set 740, reference may be made to substantially the same description of an operation of generating a graph corresponding to a task set by the electronic device 100 using the task set, which is provided above with reference to FIG. 1.

The electronic device 700 may input the learning graph to the neural network model 730 and train the neural network model 730 to output the partitioned schedule 760 for assigning the plurality of learning tasks to the plurality of processors for processing the plurality of learning tasks.

The electronic device 700 may output the partitioned schedule 760 by inputting the learning graph generated in response to the learning task set 740 to the neural network model 730. The electronic device 700 may train the neural network model 730 by comparing the partitioned schedule 760 to the GT partitioned schedule 750.

For example, the neural network model 730 may include a GNN and/or a GAT for classifying the plurality of nodes by inputting the graph. The electronic device 700 may calculate a loss using the partitioned schedule 760 and the GT partitioned schedule 750. The electronic device 700 may train the neural network model 730 using the calculated loss. A method of training the neural network model 730 may not be limited to the foregoing example, and various other methods of training the neural network model 730 may also be applied.

The electronic device 700 may arbitrarily generate a learning task set for each learning (or training) of the neural network model 730. For example, for each learning, the electronic device 700 may generate an arbitrary number of learning tasks. For each learning, a priority, a period, and an execution time of each of the learning tasks may be arbitrarily set. The electronic device 700 may set an arbitrary number of processors to which the plurality of learning tasks is to be assigned for each learning of the neural network model 730.

Training the neural network model 730 by arbitrarily setting the priority, the number, the period, and the execution time of each of the plurality of learning tasks and the number of processors to which the plurality of learning tasks is to be assigned for each learning may allow the trained neural network model 730 to output the partitioned schedule 760 for assigning a plurality of tasks included in a task set to an arbitrary number of processors even when a graph corresponding to an arbitrary task set is input to the trained neural network model 730.

The electronic device 700 of FIG. 7 may determine an edge of the graph input to the neural network model 730 based on a constraint. The constraint may refer to a condition (e.g., real-time) for which the processing of a plurality of learning tasks is completed within a set period and a learning task having a higher priority is processed before a learning task having a lower priority. Accordingly, the neural network model 730 may be trained in consideration of the constraint that the processing of each of a plurality of learning tasks is completed within a set period, and a learning task having a higher priority is processed before a learning task having a lower priority.

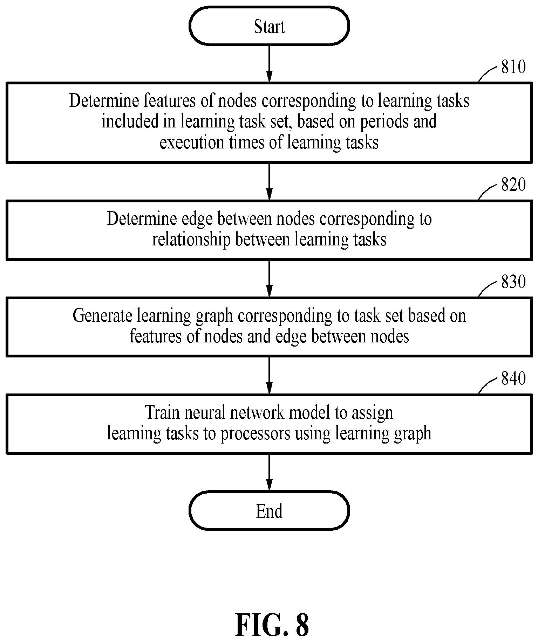

FIG. 8 illustrates an example operation of an electronic device to train a neural network model, in accordance with one or more example embodiments. Operations 810 to 840 of FIG. 8 may be performed in the shown order and manner. However, the order of one or more of the operations may change and/or one or more of the operations may be performed in parallel or simultaneously.

Referring to FIG. 8, in operation 810, the electronic device 700 may determine features of a plurality of nodes corresponding to a plurality of learning tasks included in the learning task set 740, based on periods and execution times of the plurality of learning tasks.

In operation 820, the electronic device 700 may determine an edge between the plurality of nodes corresponding to a relationship between the plurality of learning tasks.

In operation 830, the electronic device 700 may generate a learning graph corresponding to the learning task set 740 based on the features of the plurality of nodes and the edge between the plurality of nodes.

For operations 810, 820, and 830 of FIG. 8, reference may be made to substantially the same description of operations 210, 220, and 230 provided above with reference to FIG. 2.

In operation 840, the electronic device 700 may train the neural network model 730 to assign the plurality of learning tasks to a plurality of processors using the learning graph.

The electronic device 700 may output the partitioned schedule 760 by inputting the learning graph to the neural network model 730. The electronic device 700 may train the neural network model 730 using the partitioned schedule 760 output from the neural network model 730 and the GT partitioned schedule 750 for the learning task set 740.

The learning task set 740 may be arbitrarily generated. For example, the number, priority, period, and execution time of the plurality of learning tasks may be arbitrarily set. The electronic device 700 may train the neural network model 730 using the learning task set 740 that is arbitrarily generated for each learning.

The number of processors to which the plurality of learning tasks is to be assigned may be arbitrarily set for each learning. For each learning, the electronic device 700 may train the neural network model 730 using the arbitrarily set number of processors and the learning task set 740. Thus, even when a graph corresponding to an arbitrary task set is input, the trained neural network model 730 may be trained to output the partitioned schedule 760 for assigning tasks included in the arbitrary task set to the arbitrarily set number of processors.

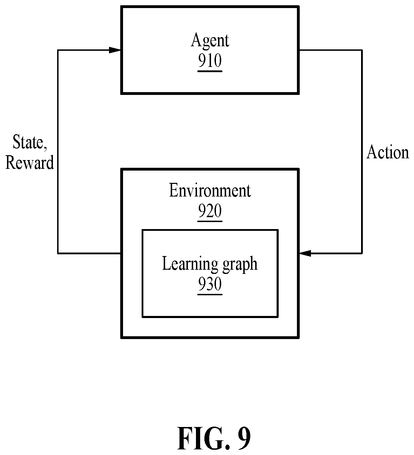

FIG. 9 illustrates an example neural network model trained using a reinforcement learning method, in accordance with one or more example embodiments.

An operation of training a neural network model that assigns a plurality of tasks to a plurality of processors using a graph corresponding to an input task set according to a reinforcement learning method will be described hereinafter with reference to FIG. 9.

For example, an environment 920 may include a learning graph 930. For the learning graph 930, reference may be made to substantially the same description of the learning graph generated in response to the learning task set 740 described above with reference to FIGS. 7 and 8.

An agent 910 (e.g., an electronic device or a processor of the electronic device) may perform an action for the environment 920. The action may be assigning a plurality of learning tasks included in a learning task set to a plurality of processors.

Depending on the action of the agent 910, the environment 920 may change from a current state s to a next state s'. The current state s may indicate a state in which the learning graph 930 is input. The next state s' may indicate a state in which a learning graph is input in a next step.

A reward for the action of the agent 910 may be calculated based on a period and an execution time set for each of the plurality of learning tasks, and a result (e.g., a time at which processing the plurality of learning tasks is completed) of processing the plurality of learning tasks by the plurality of processors according to the action.

Based on the present disclosure, when machine learning based on supervised learning is used, partitioned scheduling is executed through two processes of training and testing. In the case of training, for example GAT, is proceeded by making multiple datasets. In the datasets, the tasks including period (T) and execution time (C), which are random values, are grouped together to form a task set, and preferably the number of tasks in the task set is also set randomly. All corresponding task sets are scheduled in a possible method among the first fit, best fit, and worst fit, which are the existing partitioned scheduling methods, and the tasks are assigned to processors respectively, and thus the number of processors is indexed to each task. According to the index, the tasks in the task set are grouped into the respective processors, and the GAT trains the results of this grouping with the features of each task.

Testing is conducted to obtain results utilizing the GAT, which is trained by supervised learning. In the case of testing, the task sets that cannot be scheduled in any existing method can be inserted. Through this, the present disclosure allows a new method of partitioned scheduling.

Furthermore, through the present disclosure, a task set may be assigned to a random processor to make scheduling possible, regardless of the number of tasks and processors. As a result, efficient computing resource utilization and stability guarantee are achieved in parallel embedded systems.

According to some embodiments, issues related to guaranteeing real-time property of real-time systems can be solved by substituting with graphs, and thus, all functions of the GNN can be utilized. In addition, by utilizing not only the supervised learning of the representative examples but also the reinforcement learning basis, the real-time property of the system is guaranteed and the issues of the real-time system is solved, and thus the real-time property in various embedded systems can be guaranteed.

The electronic devices, processors, memories, agents, electronic device 100, processor 110, memory 120, electronic device 400, processor 410, memory 420, electronic device 700, processor 710, memory 720, agent 910, and other apparatuses, devices, units, modules, and components disclosed and described herein with respect to FIGS. 1-9 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

**Claims**

1. An electronic device, comprising:

    one or more first processors configured to:

        determine features of a plurality of nodes corresponding to a plurality of tasks comprised in a task set, based on a period and an execution time of each of the plurality of tasks;
        determine one or more edges between the plurality of nodes corresponding to a relationship between the plurality of tasks; and
        generate a graph corresponding to the task set based on the features of the plurality of nodes and the one or more edges between the plurality of nodes,

    the electronic device being configured to input the graph to a trained neural network model and to output a partitioned schedule for assigning the plurality of tasks included in the task set to one or more second processors, wherein the plurality of tasks is executed according to a deadline which is set for each of the plurality of tasks in the one or more second processors to which the plurality of tasks is assigned.

2. The electronic device of claim 1, wherein the features of the plurality of nodes are determined based on the period, the execution time, a value obtained by dividing the execution time by the period, and a value obtained by subtracting the execution time from the period.

3. The electronic device of claim 1 or 2, wherein, for the determining of the one or more edges, the one or more first processors are configured to:
in response to the plurality of tasks being assigned to the one or more second processors, determine the one or more edges based on interference by a priority between the plurality of tasks.

4. The electronic device of claim 3, wherein, for the determining of the one or more edges, the one or more first processors are configured to:
in response to a higher priority task of the tasks and a lower priority task of the tasks being assigned to the one or more second processors, determine the interference based on an influence of the higher priority task on the lower priority task.

5. The electronic device of claim 3 or 4, wherein, for the determining of the one or more edges the one or more first processors are configured to:
determine the interference based on a period and an execution time of a higher priority task and a period and an execution time of a lower priority task.

6. The electronic device of any of claims 3 to 5, wherein, for the determining of the one or more edges, the one or more first processors are configured to:
determine the interference based on a constraint that allows processing of each of the plurality of tasks to be completed within the deadline.

7. The electronic device of any of the previous claims, wherein the one or more edges comprise an edge weight determined based on a period and an execution time of a higher priority task of the tasks and a period and an execution time of a lower priority task of the tasks.

8. The electronic device of any of the previous claims, further comprising a memory storing instructions that, when executed by the one or more first processors, configured the one or more first processors to perform the determining of the features, the determining of the edge, and the generating of the graph.

9. A processor-implemented method, comprising:

determining features of a plurality of nodes corresponding to a plurality of tasks comprised in a task set based on a period and an execution time of each of the plurality of tasks;
determining one or more edges between the plurality of nodes corresponding to a relationship between the plurality of tasks;
generating a graph corresponding to the task set based on the features of the plurality of nodes and the one or more edges between the plurality of nodes;
inputting the graph to a trained neural network model;
outputting a partitioned schedule for assigning the plurality of tasks included in the task set to one or more processors;
wherein the plurality of tasks is executed according to a deadline which is set for each of the plurality of tasks in one or more processors to which the plurality of tasks is assigned.

10. The method of claim 9, wherein the features of the plurality of nodes are determined based on the period, the execution time, a value obtained by dividing the execution time by the period, and a value obtained by subtracting the execution time from the period.

11. The method of claim 9 or 10, wherein the determining the one or more edges comprises:
in response to the plurality of tasks being assigned to the one or more processors, determining the edge based on interference by a priority between the plurality of tasks.

12. The method of claim 11, wherein the determining the one or more edges comprises:
in response to a higher priority task and a lower priority task being assigned to one or more second processors, determining the interference based on an influence of the higher priority task on the lower priority task.

13. The method of claim 11 or 12, wherein the determining the one or more edges comprises:

determining the interference based on a period and an execution time of a higher priority task and a period and an execution time of a lower priority task.

14. The method of any of claims 11 to 13, wherein the determining the one or more edges comprises:
determining the interference based on a constraint that allows processing of each of the plurality of tasks to be completed within the deadline.

Electronic device 100

Processor
110

Memory
120

Task set
130

Graph 140

Node
141

Edge
143

**FIG. 1**

```
                         ┌──────────────┐
                         │    Start     │
                         └──────────────┘
                                │
                                ▼                           ⟋210
  ┌──────────────────────────────────────────────────────────────────┐
  │  Determine features of nodes corresponding to tasks included in task set,  │
  │          based on periods and execution times of tasks            │
  └──────────────────────────────────────────────────────────────────┘
                                │
                                ▼                           ⟋220
  ┌──────────────────────────────────────────────────────────────────┐
  │  Determine edge between nodes corresponding to relationship between tasks  │
  └──────────────────────────────────────────────────────────────────┘
                                │
                                ▼                           ⟋230
  ┌──────────────────────────────────────────────────────────────────┐
  │         Generate graph corresponding to task set based on         │
  │              features of nodes and edge between nodes             │
  └──────────────────────────────────────────────────────────────────┘
                                │
                                ▼
                         ┌──────────────┐
                         │     End      │
                         └──────────────┘
```

**FIG. 2**

FIG. 3

Electronic device 400

Processor
410

Task set
430

Memory
420

Partitioned
schedule
440

# FIG. 4

Start

Assign tasks included in task set to first processors
based on set partitioned schedule — 510

Process tasks assigned to first processors — 520

End

# FIG. 5

**FIG. 6**

Electronic device 700

Processor
710

Neural
network model
730

Memory
720

Learning task set
740

GT partitioned
schedule
750

Partitioned schedule
760

FIG. 7

```
                    ┌─────────────┐
                    │    Start    │
                    └─────────────┘
                           │
                           ▼                              ╱─810
┌──────────────────────────────────────────────────────────┐
│   Determine features of nodes corresponding to learning tasks │
│       included in learning task set, based on periods and    │
│              execution times of learning tasks               │
└──────────────────────────────────────────────────────────┘
                           │
                           ▼                              ╱─820
┌──────────────────────────────────────────────────────────┐
│        Determine edge between nodes corresponding to         │
│           relationship between learning tasks                │
└──────────────────────────────────────────────────────────┘
                           │
                           ▼                              ╱─830
┌──────────────────────────────────────────────────────────┐
│      Generate learning graph corresponding to task set based on │
│            features of nodes and edge between nodes           │
└──────────────────────────────────────────────────────────┘
                           │
                           ▼                              ╱─840
┌──────────────────────────────────────────────────────────┐
│             Train neural network model to assign             │
│        learning tasks to processors using learning graph     │
└──────────────────────────────────────────────────────────┘
                           │
                           ▼
                    ┌─────────────┐
                    │     End     │
                    └─────────────┘
```

# FIG. 8

**FIG. 9**

**Europäisches Patentamt**
**European Patent Office**
**Office européen des brevets**

# EUROPEAN SEARCH REPORT

Application Number

EP 24 15 8778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HONGZI MAO ET AL: "Learning scheduling algorithms for data processing clusters", DATA COMMUNICATION, ACM, 2 PENN PLAZA, SUITE 701NEW YORKNY10121-0701USA, 19 August 2019 (2019-08-19), pages 270-288, XP058440087, DOI: 10.1145/3341302.3342080 ISBN: 978-1-4503-5956-6 * Abstract, Introduction, Sections 4, 5, 6.1; figures 1, 4, 6, 8 * | 1-14 | INV. G06F9/48 G06F9/50 ADD. G06N3/02 G06N3/08 |
| X | LEE HYUNSUNG ET AL: "A Global DAG Task Scheduler Using Deep Reinforcement Learning and Graph Convolution Network", IEEE ACCESS, IEEE, USA, vol. 9, 23 November 2021 (2021-11-23), pages 158548-158561, XP011891786, DOI: 10.1109/ACCESS.2021.3130407 [retrieved on 2021-12-03] * Abstract, Sections I, III, IV, V-D&E,; figures 1, 6; table 1 * | 1-14 | |
| A | EP 3 992 856 A1 (SIEMENS AG [DE]) 4 May 2022 (2022-05-04) * paragraphs [0001], [0006], [0012], [0014] - [0021], [0026], [0035] - [0037], [0039] - [0047]; claims 1-15; figure 1 * | 1-14 | TECHNICAL FIELDS SEARCHED (IPC) G06F G06N |

The present search report has been drawn up for all claims

| Place of search | Date of completion of the search | Examiner |
|---|---|---|
| The Hague | 9 July 2024 | Balevic, Ana |

EPO FORM 1503 03.82 (P04C01)

## ANNEX TO THE EUROPEAN SEARCH REPORT
## ON EUROPEAN PATENT APPLICATION NO.

EP 24 15 8778

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2024

| Patent document cited in search report | Publication date | Patent family member(s) | Publication date |
|---|---|---|---|
| EP 3992856 A1 | 04-05-2022 | NONE | |

For more details about this annex : see Official Journal of the European Patent Office, No. 12/82